Europäisches Patentamt

European Patent Office

Office européen des brevets

(19)

(11) Veröffentlichungsnummer: **0 213 680**
**B1**

(12) **EUROPÄISCHE PATENTSCHRIFT**

(45) Veröffentlichungstag der Patentschrift: 09.05.90

(51) Int. Cl.⁵: **C 03 C 25/02, G 02 B 5/00**

(21) Anmeldenummer: 86201482.6

(22) Anmeldetag: 29.08.86

(54) **Optische Faser mit Kunststoffbedeckung und Verfahren zum Herstellen einer derartigen optischen Faser.**

(30) Priorität: 03.09.85 NL 8502402

(43) Veröffentlichungstag der Anmeldung:
11.03.87 Patentblatt 87/11

(45) Bekanntmachung des Hinweises auf die
Patenterteilung:
09.05.90 Patentblatt 90/19

(84) Benannte Vertragsstaaten:
DE FR GB IT NL SE

(56) Entgegenhaltungen:
EP-A-0 140 415
US-A-4 127 370

PATENTS ABSTRACTS OF JAPAN, Band 8, Nr.
222 (C-246)1659r, 9. Oktober 1984; & JP-A-59
107 943 (NIPPON DENSHIN DENWA KOSHA)
22-06-1984

PATENTS ABSTRACTS OF JAPAN, Band 8, Nr. 7
(C-204)1444r, 12. Januar 1984; & JP-A-58 176
148 (NIPPON DENSHIN DENWA KOSHA) 15-10-
1983

(73) Patentinhaber: N.V. Philips'
Gloeilampenfabrieken
Groenewoudseweg 1
NL-5621 BA Eindhoven (NL)

(72) Erfinder: Broer, Dirk Jan
p/A INT. OCTROOIBUREAU B.V. Prof. Holstlaan
6
NL-5656 AA Eindhoven (NL)
Erfinder: Mol, Grietje Neeltje
p/A INT. OCTROOIBUREAU B.V. Prof. Holstlaan
6
NL-5656 AA Eindhoven (NL)
Erfinder: Jochem, Cornelis Marinus Gerrit
p/A INT. OCTROOIBUREAU B.V. Prof. Holstlaan
6
NL-5656 AA Eindhoven (NL)

(74) Vertreter: Pennings, Johannes et al
Internationaal Octrooibureau B.V. Prof.
Holstlaan 6
NL-5656 AA Eindhoven (NL)

(56) Entgegenhaltungen:
Electronic letters, Band 20, Seiten 841,842
(1984) Y. SHUTO et al.

# EP 0 213 680 B1

**Beschreibung**

Die Erfindung bezieht sich auf eine optische Faser mit Kunststoffbedeckung, mit einer Glasfaser, einer ersten Umhüllungsschicht aus einem Kunstgummi und einer folgenden Umhüllungsschicht aus einem Kunststoff, dessen Moleküle hauptsächlich in der Längsrichtung der Glasfaser orientiert sind.

Die Erfindung bezieht sich weiterhin auf ein Verfahren und auf eine Vorrichtung zum Herstellen einer derartigen optischen Faser.

Glasfasern für die optische Nachrichtenübertragung werden im allgemeinen mit einer Umhüllung aus einem Kunststoff bedeckt, um mechanische Beschädigungen zu vermeiden. Um optische Übertragungsverluste infolge von Mikrobeugungen zu vermeiden, wird eine Umhüllung bevorzugt, die aus mehreren Schichten aufgebaut ist. Dabei wird z.B. folgendes Verfahren angewandt: Unmittelbar nach der Bildung der Glasfaser, z.B. durch Ziehen aus einer Vorform oder das Doppeltiegelverfahren, wird eine erste weiche Pufferschicht aus einem Kunstgummi mit einem Elastizitätsmodul von 1 bis 10 MPa angebracht. Um diese weiche Pufferschicht während der weiteren Verarbeitung der optischen Faser zu schützen, wird eine zweite härtere Aussenschicht aus einem Kunststoff mit einem Elastizitätsmodul über 100 MPa angebracht. Auch diese Aussenschicht wird unmittelbar nach der Bildung der Glasfaser angebracht, d.h. bevor die Faser über ein Führungsrolle geführt wird oder bevor sie gelagert wird. Die Pufferschicht und die Aussenschicht bilden zusammen die primäre Kunststoffbedeckung der Glasfaser.

Um die optische Faser währen der Verkabelung, beim Verlegen der Kabel und während der Lebensdauer der Kabel gegen Umwelteinflüsse zu schützen, wird die optische Faser ausserdem mit einer dickeren sekundären Kunststoffbedeckung mit einem Elastizitätsmodul über 1 GPa versehen. Diese sekundäre Kunststoffbedeckung wird. nicht unbedingt unmittelbar nach der Bildung der Glasfaser angebracht.

Es werden zwei Ausführungsformen einer derartigen sekundären Kunststoffbedeckung angewendet. Bei der einen Ausführungsform liegt die optische Faser mit der primären Kunststoffbedeckung frei in der sekundären Kunststoffbedeckung, die folglich einen Schlauch bildet. Der Raum zwischen der optischen Faser und dem Schlauch wird dabei im allgemeinen mit einer thixotropen Flüssigkeit oder einem Gel. z.B. einem mit Siliziumdioxid gefüllten Silikonöl, gefüllt. Bei der anderen Ausführungsform ist die sekundäre Kunststoffbedeckung mit der primären Kunststoffbedeckung haftend verbunden.

Es ist bekannt, dass die Mikrobeugungsverluste einer optischen Faser unter Querbelastung verringert werden können, ohne dabei eine grosse Temperaturetempfindlichkeit entstehen zu lassen, indem man dan Molekülen eines Teils der Kunststoffbedeckung eine bevorzugte Orientierung in der Längsrichtung oder optischen Faser erteilt. Dadurch wird der Elastizitätsmodul des Kunststoffes in der Längsrichtung vergrössert, während der thermische Ausdehnungdkoeffizient kleiner wird. Vorzugsweise ist der thermische Ausdehnungskoeffizient der Gasfaser nahezu gleich dem des Kunststoffes.

In einer Veröffentlichung von Y. Shuto et al. in Electronics Letters Band 20, Seiten 841—842 (1984) wird die Herstellung einer derartigen optischen Faser beschrieben, wobei eine Glasfaser mit einer Pufferschicht aus einem Silikonkautschuk bedeckt wird. Danach wird eine Umhüllung aus einem flüssigkristallinen Polyester auf der Faser angebracht, und zwar durch Extrusion bei einer Temperatur über 240°C, wobei Orientierung der Polyestermoleküle durch Abscheren während der Extrusion erhalten wird. Die Orientierung wird durch Abkühlung des geschmolzenen Polyestres festgelegt, wobei dieses in den festen Zustand übergeht.

Dieses bekannte Verfahren weist jedoch mehrere Nachteile auf. Durch die hohe Temperatur beim Extrusionsverfahren wird die Auswahlmöglichkeit an geeigneten Materialien für die Pufferschicht eingeschränkt. So kann z.B. bei Polyurethankautschuk bei der Extrusion einer folgenden Schicht eine thermische Zersetzung auftreten. Wegen der hohen Temperatur ist ausserdem eine lange Kühlstrecke notwendig, bevor die Faser weiterverarbeitet oder aufgewickelt werden kann. Bei Abkühlung durch strömendes Wasser ist bei in der Technik üblichen Schichtdicken und Faserbedeckungsgeschwindigkeiten eine Kühlwanne mit einer Länge von über 5 m notwendig. Dies ist insbesondere nachteilig, wenn beabsichtigt wird, auch die sekundäre Kunststoffbedeckung unmittelbar nach den Ziehen der Glasfaser anzubringen. Eine weiterer Nachteil beruht auf der hohen Viskosität (über 100 Pa.s) des geschmolzenen Kunststoffes. Die Faserbedeckungsgeschwindigkeit wird durch den höchsten Druck, der bei der Extrusion angelegt werden kann, um den Kunststoff zu transportieren, beschränkt. Insbesondere beim Anbringen einer dünnen Unhüllung durch eine enge Düse ist der Druck ein beschränkender Faktor.

Die Erfindung hat die Aufgabe, eine optische Faser und ein Verfahren zum Herstellen derselben zu schaffen, wie dies eingangs beschrieben wird, wobei die obenstehend genannten Nachteile vermieden werden.

Diese Aufgabe wird nach der Erfindung durch eine optische Faser de eingangs beschriebenen Art gelöst, die weiterhin das Kennzeichen aufweist, dass der orientierte Kunststoff aus einer härtbaren Kunststoffzusammensetzung gebildet ist, die eine oder mehrere oligomere Verbindungen aufweist, deren Moleküle mit reaktiven Gruppen versehen sind und deren Molekulargewicht kliener als 5000 ist.

Es ist zwar bekannt, Glasfasern für die optische Nachrichtenübertragung unmittelbar nach der Bildung der Glasfaser mit einer härtbaren Kunststoffzusammensetzung zu bedecken und diese dann zum Aushärten zu bringen, namentlich zur Herstellung der primären Kunststoffbedeckung siehe z.B. die nicht vorveröffentliche Europäische Patentanmeldung 167199. In derartigen Fällen wird jedoch eine Schicht aus

2

einem Kunststoff gebildet, die keine besondere Orientierung in der Längsrichtung der Glasfaser aufweist.

Im Rahmen der Erfindung gibt es mehrere Möglichkeiten für die Lage der Umhüllungsschicht aus orientiertem Kunststoff. Die orientierte Kunststoffschicht kann z.B. die Aussenschicht der primären Kunststoffbedeckung sein oder eine eng anliegende sekundäre Kunststoffbedeckung. Auch ist es möglich die Aussenschicht der primären Kunststoffbedeckung sowie die sekundäre Kunststoffbedeckung aus einem orientierten Kunststoff herzustellen.

Durch die Orientierung der Polymermoleküle in de Umhüllungsschicht werden ein hoher Elastizitätsmodul und ein niedriger Ausdehnungskoeffizient des Kunststoffes in der Längsrichtung der optischen Faser erhalten. Durch die niedrige Viskosität der härtbaren Kunststoffzusammensetzung ist zum Anbringen derselben nur ein geringer Druck notwendig, wodurch eine grosse Bedeckungsgeschwindigkeit erzielbar ist und wobei auch dünne Schichten angebracht werden können. Das Anbringen und Aushärten der Kunststoffzusammensetzung kann bei niedriger Temperatur, z.B. unter 100°C erfolgen, wodurch die Pufferschicht der primären Kunststoffbedeckung nicht angegriffen wird. Das Anbringen und Aushärten der Kunststoffzusammensetzung, wobei nun keine Wanne mit Kühlwasser mehr notwendig ist, kann mit einer derartigen Geschwindigkeit erfolgen, dass das Bedecken der Glasfaser in einem einzigen Verfahrenschritt erfolgen kann, einschliesslich der sekundären Kunststoffbedeckung, wenn diese aus der härtbaren Kunststoffzusammensetzung gebildet wird.

Ein besonderer Vorteil der optischen Faser und des Verfahrens nach der Erfindung ist, dass die Aussenschicht der primären Kunststoffbedeckung nicht mehr notwendig ist und folglich darauf verzichtet werden kann, wenn die sekundäre Kunststoffbedeckung unmittelbar nach der Bildung der Faser in Form einer orientierten Kunststoffschicht angebracht wird.

Durch die anisotropen Eigenschaften des orientierten Kunststoffes führt eine Wasserabsorption in der Kunststoffbedeckung hauptsächlich zu einer Volumenvergrösserung in der Richtung quer zu der Glasfaser. Die optische Faser ist dadurch weniger empfindlich für optische Dämpfung infolge von Wasserabsorption als eine optische Faser mit einer isotropen Kunststoffbedeckung.

Die härtbare Kunststoffzusammensetzung, die nach der Erfindung verwendet wird, muss reaktive oligomere Moleküle mit einem regelmässigen Aufbau aufweisen, wodurch Eigenschaften wie von einem flüssigkristallinen Material erhalten werden. Das Molekulargwicht der oligomeren Verbindung muss kleiner als 5000 sein, um den Molekülen eine Mobilität zu erteilen, die ausreicht, dass sie sich ausrichten können.

In der optischen Faser und in dem Verfahren nach der Erfindung ist die oligomere Verbindung aus der Gruppe gewählt, die durch Polyesterurethanakrylate und Polyätherurethanakrylate gebildet ist. Diese Verbindungen haben einen derart regelmässigen Aufbau, dass sie in nicht ausgehärtetem Zustand bei Raumptemperatur kristallin sind. Die härtbare Kunststoffzusammensetzung kann weiterin reaktive Monomere und andere übliche Zusätze aufweisen, wie diese z.B. in der europäischen Patentanmeldung 167199 beschrieben sind.

Die Aufgabe, ein Verfahren zum Herstellen einer optischen Faser zu schaffen, wird nach der Erfindung durch ein Verfahren gelöst, bei dem auf einer Glasfaser mit mindestens einer Umhüllungsschicht aus einem Kunstgummi eine härtbare Kunststoffzusammensetzung angebracht wird, die eine oder mehrere oligomere Verbindungen aufweist, deren Moleküle mit reaktiven Gruppen versehen sind und deren Molekulargewicht kleiner als 5000 ist, wobei die Moleküle der härtbaren Kunststoffzusammensetzung beim Anbringen auf der Glasfaser orientiert werden, wonach die härtbare Kunststoffzusammensetzung unter Bildung eines Kunststoffes, dessen Moleküle hauptsäuchlich in der Längsrichtung der optischen Faser orientieren sind, zum Aushärten gebracht wird.

Die Moleküle der oligomeren Verbindung können während oder nach der Bedeckung der Glasfaser z.B. durch Abscherkräfte in der Flüssigkeit orientiert werden. Eine besonders wirksame Orientierung wird nach der Erfindung dadurch erhalten, dass die Moleküle der härtbaren Kunststoffzusammensetzung beim Anbringen auf der Glasfaser mittels einer Dehnungsströmung orientiert werden. Die Dehnung in der Flüssigkeit wird durch die Faserziehgeschwindigkeit und die Ausströmungsgeschwindgkeit der härtbaren Kunststoffzusammensetzung bestimmt, die z.B. mittels des Druckes geregelt werden kann.

Um eine Lunkerbildung in der Kunststoffbedeckung zu vermeiden, empfiehlt es sich, dass in dem Raum zwischen der Glasfaser und der zugeführten Kunststoffzusammensetzung ein Unterdruck erzeugt wird.

Um die Orientierung de Moleküle in der härtbaren Kunststoffzusammensetzung mittels einer Vernetzungsreaktion festzulegen, muss die härtbare Kunststoffzusammensetzung in einer Zeit ausgehärtet werden, die kürzer ist als die Relaxationszeit der Moleküle. Die Relaxationszeit der Moleküle wird durch die Molekülgrösse und durch die Anziehungskraft zwischen den Molekülen bestimmt. Mit den obenstehend beschriebenen oligomeren Verbindungen und mit reaktiven niedrigmolekularen flüssig kristallinen Verbindungen lassen sich gute Resultate erzielen.

Das Aushärten der härbaren Kunststoffzusammensetzung kann z.B. durch Erhöhung der Temperatur erfolgen, wobei jedoch die Relaxationszeit oder orientierten Moleküle kürzer wird.

Bei einer bevorzugenten Ausführungsform des erfindungsgemässen Verfahrens wird die härtbare Kunststoffzusammensetzung dirch aktinische Strahlung zum Aushärten gebracht. Unter aktinischer Strahlung ist z.B. eine Bestrahlung mit UV—Licht, Elektronen, Röntgenstrahlung, Gammastrahlen oder mit hochenergetischen Teilchen zu verstehen. Bei Bestrahlung mit UV—Licht sind Aushärtezeiten kürzer als 0,1

EP 0 213 680 B1

Sekunde erhalten worden. Besonders kurze Aushärtezeiten lassen sich durch Aushärtung in einer Stickstoffatmosphäre erzielen. Est ist zweckmässig, die Bestrahlungsvorrichtung in einem möglichst kurzen Abstand von der Faserbedeckungsvorrichtung anzuordnen, damit Orientierungsverluste der gerichteten Moleküle beschränkt werde. Ein an sich bekannter Vorteil der Verwendung einer durch Strahlung härtbaren Kunststoffzusammensetzung ist das Fehlen von Lösungsmitteln und anderen Stoffen, die während oder infolge der Aushärtung aus der gebildeten Schicht abgeführt werden müssen. Beim erfindungsgemäßen Verfahren ist dies nicht zur zum Schutz der Umwelt, sondern auch für die Aushärtegeschwindigkeit und die Beibehaltung der Orientierung der Moleküle sehr günstig.

In der europäischen Patentanmeldung EP—A—140415 sind optische Glasfaser mit einem aus zwei Schichten aufgebauten Bedeckung aus Akrylatharz beschrieben worden, wobei aber keine Orientierung des Kunststoffes beabsichtigt wird.

Glasfaser mit orientierten Kunststoffbedeckungen sind beschrieben worden in Patents Abstracts of Japan, Band 8, Nr. 222 (C—246), 1659, Seite 246, übereinstimmend mit JP 59—107943 (Kokai) und in der US Patentschrift 4127370. Dabei werden aber polymere Moleküle orientiert und nicht, wie nach der Erfindung, oligomere Moleküle im orientieren Zustand gebracht und dann polymerisiert.

Ausführungsbeispiele der Erfindung sind in der Zeichnung dargestellt und werden im folgenden näher beschrieben. Es zeigen:

Fig. 1a und 1b Schnitte (nicht maßgerecht durch unterschiedliche Ausführungsformen einer optischen Faser nach der Erfindung,

Fig. 2 die Strukturformel eines Polyätherurethanakrylats,

Fig. 3 die Strukturformel eines Polyesterurethanakrylats und

Fig. 4 einen Schnitt durch ein Vorrichtung zum Ausführen des Verfahrens nach der Erfindung.

Ausführungsbeispiele der optischen Faser und Verfahren nach der Erfindung

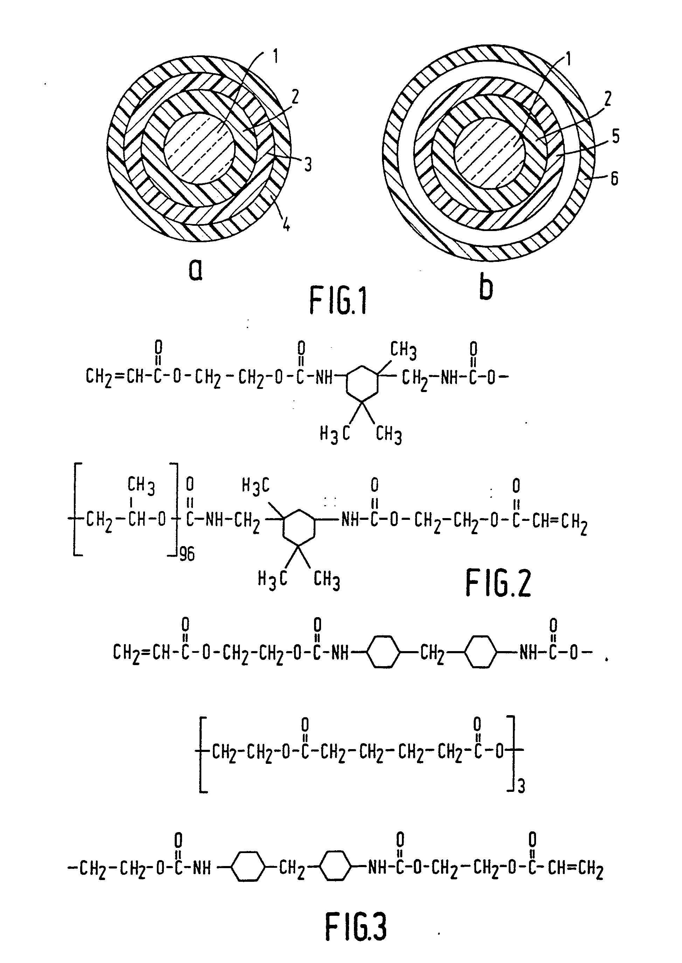

Es wird auf bekannte Weise eine Glasfaser gebildet, indem diese aus einer Vorform gezogen wird. Unter Glasfaser ist in diesem Zusammenhang eine Faser aus Glas oder Quarzglas zu verstehen. Die Faser wiest ein Kernglas und ein Mantelglas mit unterschiedlichen Brechzahlen auf (in den Fig. 1a und 1b nicht dargestellt). Statt dessen kann auch eine Faser mit einer von innen nach aussen sich allmählich ändernden Brechzahl verwendet werden und statt einer aus einer Vorform gezogenen Faser kann eine mit dem Doppeltiegelverfahren hergestellte Faser verwendet werden. Die in Fig. 1 dargestellte Glasfaser 1 hat einen kreisförmigen Querschnitt (Durchmesser 125 µm), aber der Querschnitt kann auch eine beliebige andere, z.B. elliptische Form haben.

Unmittelbar nach der Bildung der Glasfaser 1 wird darauf eine Schicht aus einer härtbaren Kunststoffzusammensetzung angebracht, die danach unter Bildung einer Pufferschicht 2 aus einem Kunstgummi mit einer Dicke von 30 µm ausgehärtet wird. Die härtbare Kunststoffzusammensetzung weist als Hauptbestandteil (76 Gew.%) ein Polyätherurethanakrylat auf, wie dies in der europäischen Patentanmeldung 167199 beschrieben und in Fig. 2 dargestellt ist. Die härtbare Kunststoffzusammensetzung weist weiterhin die reaktiven Monomere 2-Phenoxy-äthylakrylat (14 Gew.%) und Hexandioldiakrylat (2 Gew.%) und die lichtempfindlichen Initiatoren 2,2-Dimethoxy-2-phenyl-azetophenon (2 Gew.%), 2,2-Dimethyl-2-hydroxy-azetophenon (2 Gew.%) und 2-Oxybenzophenon-2-äthoxy-äthylazetophenone (2 Gew.%) Ausserdem weist die härtbare Kunststoffzusammensetzung 2 Gew.% eines Gemisches aus Mono- und Di-2-Akryloxyäthylphosphat mit einem Molverhältnis von 1:1 auf. Auch andere härtbare Kunststoffzusammensetzung, wie z.B. Polysiloxane, eignen sich dazu, als Pufferschict der Kunststoffbedeckung der Glasfaser nach der Erfindung verwendet zu werden. Die härtbare Kunststoffzusammensetzung wird mittels Bestrahlung mit einer Hochdruckquecksilberlampe, die UV—Licht mit Wellenlängen von 200 bis 400 nm erzeugt mit einer Intensität von 0,27 $W/cm^2$ gemessen auf der Kunststoffschicht, innerhalb maximal 0,5 Sekunde zum Aushärten gebracht. Est ist auch möglich, die härtbare Kunststoffzusammensetzung auf eine andere Art und Weise auszuhärten, z.B. durch Bestrahlung mit Elektronen, wobei dann die härtbare Kunststoffzusammensetzung keinen lichtempfindlichen Initiator aufzuweisen braucht.

Danach wird eine zweite Schicht aus einem Kunststoff 3 mit einer Dicke von 30 µm auf der Faser angebracht (siehe Fig. 1a), z.B. dadurch, dass die Faser mit einer härtbaren Kunststoffzusammensetzung bedeckt wird, die danach durch Bestrahlung mit UV—Licht zum Aushärten gebracht wird. Eine geeignete handelsübliche Kunststoffzusammensetzung für die zweite Schicht (Aussensicht der primären Kunststoffbedeckung) ist DeSolite 042® von DeSoto Inc., die einen lichtempfindlichen Initiator aufweist.

Danach wird die sekundäre Kunststoffbedeckung 4 mit eine Dicke von 300 µm angebracht. Dazu wird eine härtbare Kunststoffzusammensetzung verwendet die 98 Gew.% eines Polyesterurethanakrylats aufweist, wie dies in Fig. 3 dargestellt ist, und die weiterhin 2 Gew.% des lichtempfindlichen Initiators 1-Hydroxy-1-methyl-äthylphenylketon aufweist. Diese Kunststoffzusammensetzung wird bei einer Temperatur von 80°C auf der Galsfaser mit der primären Kunstoffbedeckung angebracht. Die Viskosität der Kunststoffzusammensetzung bei 80°C beträgt 6,7 Pa.s. Beim Anbringen wird die härtbare Kunststoffzusammensetzung einer Dehnungsströmung ausgesetzt, wodurch die Moleküle orientiert werden. Die Ordnung, die auf diese Weise entsteht, wird durch die Vernetzungsreaktion beim Aushärten festgelegt. Die härtbare Kunststoffzusammensetzung wird durch Bestrahlung mit einer elektrodenlosen Quecksilberlampe von Fusion Systems Inc. mit einer Intensität von 0,27 $W/cm^2$, gemessen auf der

4

Kunststoffzusammensetzung, ausgehärtet. Dadurch, dass in einer Stickstoffatmosphäre und bei einer Temperatur von 80°C ausgehärtet wird, ist die Aushärtezeit kürzer als 0,03 Sekunde.

Die Orientierung in der auf diese Wiese erhaltenen Kunststoffschicht 4 kann mit Hilfe eines Polarisationsmikroskops sichtbar gemacht werden. Einige an dem anisotropen Material gemessene Eigenschaften sind in Tabelle 1 angegeben.

TABELLE 1

| | Temperatur | | |
|---|---|---|---|
| | −40°C | 25°C | 80°C |
| Ausdehnungskoeffizient | | | |
| axial ($10^{-5}$/°C) | 1,1 | 2,6 | 2,7 |
| radial ($10^{-5}$/°C) | 7,0 | 8,0 | 26,0 |
| Elastizitätsmodul | | | |
| axial (MPa) | 34200 | 14600 | 300 |
| radial (MPa) | — | 600 | — |
| Bruchfestigkeit | | | |
| axial (MPa) | — | >60 | — |

Das anisotrope Material kennzeichnet sich durch einen niedrigen axialen Ausdehnungskoeffizienten (linearer thermischer) Ausdehnungskoeffizient) und einen hohen axialen Elastizitätsmodul une eine hohe axiale Bruchfestigkeit. Das Material weist orientierte Kristallisierung auf. In diesem Ausführungsbeispiel liegt die Schmelztemperatur der Kristalle bei 70°C, was den niedrigen Elastizitätsmodul bei 80°C erklärt. Nach der Erfindung ist es möglich, ein Material mit einer höheren Schmelztemperatur der Kristalle zu verwendet.

In einer alternativen Ausführungsform der optischen Faser nach Erfindung (Fig. 1b) wird die Aussenschicht 5 der primären Kunststoffbedeckung auf die obenstehend angegebene Art und Weise aus dem orientieren Kunststoff, z.B. mit einer Dicke von 40 µm hergestellt. Zum weiteren Schutz kann die optische Faser noch mit einer folgenden Schicht aus einem thermoplastischen Kunststoff bedeckt werden, z.B. aus Nylon, in Form eines Schlauches 6, in dem die Faser sich frei bewegen kann. Dadurch wird eine besonders temperaturunempfindliche Faser erhalten.

Vergleichsbeispiel, nicht nach der Erfindung

Auf die in den vorhergehenden Beispielen beschriebene Art und Weise wird eine Glasfaser mit Kunststoffbedeckung hergestellt, wobei jedoch die härtbare Kunststoffzusammensetzung zur Bildung der Schicht 4 (Fig. 1a) oder 5 (Fig. 1b) nicht einer Dehnungsströmung im Herstellungsverfahren ausgesetzt wird. Die härtbare Kunststoffzusammensetzung wird auf übliche Weise dadurch angebracht dass die Glasfaser durch ein Gefäss mit der härtbaren Kunststoffzusammensetzung gezogen wird. Die Eigenschaften des nach dem Aushärten erhaltenen isotropen Materials sind in Tabelle 2 angegeben.

TABELLE 2

Nicht nach der Erfindung

| | Temperatur | | |
|---|---|---|---|
| | −40°C | 25°C | 80°C |
| Ausdehnungskoeffizient ($10^{-5}$/°C) | 7,0 | 13,0 | 18,0 |
| Elastizitätsmodul (MPa) | 1800 | 600 | 18 |
| Bruchkraft (MPa) | — | 28 | — |

Ein Vergleich mit Tabelle 1 zeigt, dass die Eigenschaften des isotropen Materials mit den Eigenschaften des anisotropen Materials in radialer Richtung vergleichbar sind, dass aber die genannten Eigenschaften wesentlich weniger günstig sind als Eigenschaften des anisotropen Materials in axialer Richtung. Gerade diese letzteren Materialeigenschaften sind bei der Verwendung als Umhüllungsmaterial für optische Fasern von Bedeutung.

Beschreibung der verwendeten Vorrichtung

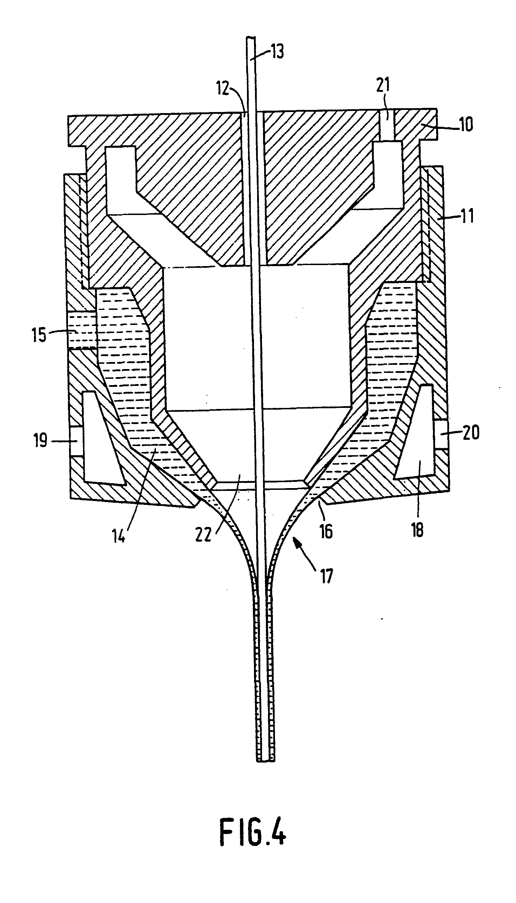

Fig. 4 zeigt einen schematischen Schnitt durch eine Faserbedeckungsvorrichtung mit einem oberen Teil 10 und einem Bodenteil 11, wobei diese Teile z.B. mittels einer Schraubverbindung miteinander verbunden sind. Der obere Teil 10 weist einen Zuführungskanal 12 auf, durch den eine Glasfaser 13 mit den (in der Figur nicht dargestellten) ggf. bereits vorhandenen Umhüllungsschichten zugeführt werden kann. Der obere Teil 10 und der Bodenteil 11 umschliessen einen Raum 14. Die härtbare Kunststoffzusammensetzung kann durch eine Zuführungsöffnung 15 in dem Bodenteil 11 zugeführt werden und über den Raum 14 und eine ringförmige Düse 16 auf der Glasfaser 13 angebracht werden. Der Durchmesser der ringförmigen Düse 16 ist grösser als der Durchmesser der Glasfaser 13 mit den darauf anzubringenden Schichten. Die Transportgeschwindigkeit der Glasfaser 13 in der Abwärtsrichtung wird derart gross gewählt, dass die flüssige härtbare Kunststoffzusammensetzung einer Dehnungsströmung ausgesetzt wird, and der Stelle, die in der Figur durch den Pfeil 17 bezeichnet ist. In dem Bodenteil 11 befinden sich Kanäle 18 mit einer Zuführungsöffnung 19 und mit einer Abführungsöffnung 20, wodurch beim Betrieb eine Heizflüssigkeit, z.B. Wasser mit einer Temperatur von 80°C, hindurchgeführt werden kann. In dem oberen Teil 10 befindet sich eine Öffnung 21, die mit einer (in der Figur nicht dargestellten) Vakuumpumpe verbunden werden kann, um in dem Raum 22 zwischen der Glasfaser 13 und der zugeführten Kunststoffzusammensetzung einen Unterdruck zu erzeugen.

**Patentansprüche**

1. Optische Faser mit Kunststoffbedeckung, mit einer Glasfaser, einer ersten Umhüllungsschicht aus einem Kunstgummi und einer folgenden Umhüllungsschicht aus einem Kunststoff, dessen Moleküle hauptsächlich in der Längsrichtung der Glasfaser orientiert sind, dadurch gekennzeichnet, daß der orientierte Kunststoff aus einer härtbaren Kunststoffzusammensetzung gebildet ist, die eine oder mehrere oligomere Verbindungen aufweist, deren Moleküle mit reaktive Gruppen versehen sind und deren Molekulargewicht kleiner als 5000 ist, wobei die oligomere Verbindung aus der Gruppe gewählt ist, die durch Polyesterurethanakrylate und Polyätherurethanakrylate gebildet ist.

2. Verfahren zum Herstellen einer optischen Faser, dadurch gekennzeichnet, daß auf einer Glasfaser mit mindestens eine Umhüllungsschicht aus einem Kunstgummi eine härtbare Kunststoffzusammensetzung angebracht wird, die eine oder mehrere oligomere Verbindungen aufweist, deren Moleküle mit reaktiven Gruppen versehen sind und deren Molekulargewicht kleiner als 5000 ist, wobei die oligomere Verbindung aus der Gruppe gewählt ist, die durch Polyesterurethanakrylate und Polyätherurethanakrylate gebildet ist, wobei die Moleküle der härtbaren Kunststoffzusammensetzung beim Anbringen auf der Glasfaser orientiert werden, wonach die härtbaren Kunststoffzusammensetzung unter Bildung eines Kunststoffes, dessen Moleküle hauptsächlich in der Längsrichtung der optischen Faser orientiert sind, zum Aushärten gebracht wird.

3. Verfahren nach Anspruch 2, dadurch gekennzeichnet, daß die Moleküle der härtbaren Kunststoffzusammensetzung beim Anbrigen auf der Glasfaser mittels einer Dehungsströmung orientiert werden.

4. Verfahren nach Anspruch 3, dadurch gekennzeichnet, daß in dem Raum zwischen der Glasfaser und der zugeführten härtbaren Kunststoffzusammensetzung ein Unterdruck erzeugt wird.

5. Verfahren nach Anspruch 2 bis 4, dadurch gekennzeichnet, daß die härtbare Kunststoffzusammensetzung mittels aktinischer Strahlung zum Aushärten gebracht wird.

**Revendications**

1. Fibre optique munie d'un revêtement en matière synthétique comprenant une fibre en verre, une première couche d'enrobage en un caoutchouc synthétique et une couche d'enrobage suivante en une matière synthétique, dont les molécules sont essentiellement orientées dans la direction longitudinale de la fibre en verre, caractérisé en ce que la matière synthétique orientée est formée à partir d'une composition de matière synthétique durcissable comprenant un ou plusieurs composés oligomères, dont les molécules sont munies de groupes réactifs et dont le poids moléculaire est inférieur à 5000, le composé oligomère étant choisis dans le groupe constitué par l'acrylate de polyétheruréthane et l'acrylate de polyesteruréthane.

2. Procédé pour la réalisation d'une fibre optique, caractérisé en ce que sur une fibre en verre présentant au moins une couche d'enrobage en un caoutchouc synthétique est appliquée une composition de matière synthétique durcissable présentant un ou plusieurs composés oligoméres dont les molécules sont munies de groupes réactifs et dont le poids moléculaire est inférieur à 5000, le composé oligomère est choisi dans le groupe formé par l'acrylate de polyesteruréthane et l'acrylate de polyétheruréthane, les

EP 0 213 680 B1

molécules de la composition de matière synthétique durcissable étant orientées pendant l'application sur la fibre en verre, après quoi la composition de matière synthétique durcissable est portée à durcissement avec formation d'une matière synthétique dont les molécules sont essentiellement orientées dans la direction longitudinale de la fibre optique.

3. Procédé selon la revendication 2, caractérisé en ce que lors de l'application sur la fibre en verre, les molécules de la composition de matière synthétique durcissable sont orientées à l'aide d'une circulation d'extension.

4. Procédé selon la revendication 3, caractérisé en ce que dans l'espace compris entre la fibre en verre et la composition de matière synthétique durcissable amenée est réalisée une dépression.

5. Procédé selon la revendication 2 à 4, caractérisé en ce que la composition de matière synthétique durcissable est durcie à l'aide de rayonnement actinique.

**Claims**

1. An optical fibre having a synthetic resin cladding, comprising a glass fibre, a first cladding layer of a synthetic rubber and a subsequent cladding layer of a synthetic resin the molecules of which are oriented mainly in the longitudinal direction of the glass fibre, characterized in that the oriented synthetic resin is formed from a curable synthetic resin composition which comprises one or more oligomeric compounds the molecules of which comprise reactive groups and the molecular weight of which is smaller than 5000, the oligomeric compound being selected from the group formed by polyesterurethane acrylates and polyetherurethane acrylates.

2. A method of manufacturing an optical fibre, characterized in that a curable synthetic resin composition which comprises one or more oligomeric compounds the molecule of which comprise reactive groups and the molecular weight of which is smaller than 5000, is applied to a glass fibre having at least one cladding layer of synthetic rubber, in which the oligomeric compound is selected from the group formed by polyesterurethane acrylates and polyetherurethane acrylates, and in which the molecules of the curable synthetic resin composition are oriented during application to the glass fibre, after which the curable synthetic resin composition is made to cure while forming a synthetic resin the molecules of which are oriented substantially in the longitudinal direction of the optical fibre.

3. A method as claimed in Claim 2, characterized in that the molecules of the curable synthetic resin composition are oriented during the application to the grass fibre by means of an elongation flow.

4. A method as claimed in Claim 3, characterized in that a substantial atmospheric pressure is created in the space between the glass fibre and the applied curable synthetic resin composition.

5. A method as claimed in any of the Claims 2 up to and including 4, characterized in that the curable synthetic resin composition is made to cure by means of actinic radiation.

7

FIG.1

FIG.2

FIG.3

FIG.4